# EUROPEAN PATENT APPLICATION

(11) **EP 2 116 954 A1**
(43) Date of publication of application: **11.11.2009**
(21) Application number: 09159928.2
(22) Date of filing: 11.05.2009
(51) Int. Cl.: G06F 21/24

(54) **Apparatus and method for accessing data in a multi-tenant database according to a trust hierarchy**

(30) Priority: 09.05.2008 US 118607
(71) Applicant: Business Objects, S.A., 92309 Levallois-Perret (FR)
(72) Inventor: Hsieh, Mone Siu Man, Burnaby British Columbia V5E 2N2 (CA); Wu, Ju, Coquitlam British Columbia V3E 2Y7 (CA)
(74) Representative: Kazi, Ilya

(57) **Abstract**

A computer readable storage medium comprises executable instructions to establish a trust hierarchy between tenants of a multi-tenant database. Data access rights for the trust hierarchy are specified, the data access rights defined by the tenants of the multi-tenant database. Queries on the multi-tenant database are processed subject to the data access rights for the trust hierarchy.

## Description

### FIELD OF THE INVENTION

This invention relates generally to accessing data in a multi-tenant database. More particularly, this invention relates to techniques for establishing a trust hierarchy between tenants of a multi-tenant database so that access to data in the database is subject to the trust hierarchy.

### BACKGROUND OF THE INVENTION

Business Intelligence generally refers to a category of software systems and applications used to improve business enterprise decision-making and governance. These software tools provide techniques for analyzing and leveraging enterprise applications and data. They are commonly applied to financial, human resource, marketing, sales, service provision, customer, and supplier analyses. More specifically, Business Intelligence tools can include reporting and analysis tools to analyze, forecast and present information, content delivery infrastructure systems to deliver, store and manage reports and analytics, data warehousing systems to cleanse and consolidate information from disparate sources, integration tools to analyze and generate workflows based on enterprise systems, database management systems to organize, store, retrieve and manage data in databases, such as relational, Online Transaction Processing ("OLTP") and Online Analytic Processing ("OLAP") databases, and performance management applications to provide business metrics, dashboards, and scorecards, as well as best-practice analysis techniques for gaining business insights.

Business Intelligence tools can be available on demand by a Business Intelligence provider, such as Business Objects, an SAP^{®} company, of San Jose, CA. The Business Intelligence provider builds and maintains a Business Intelligence infrastructure for multiple organizations. The organizations may access the Business Intelligence infrastructure over the web, thereby facilitating the management, sharing, and analysis of organizational data. The Business Intelligence infrastructure may be based on a "multi-tenant" model in which multiple "tenants," i.e., multiple organizations, share Business Intelligence resources, such as, for example, a "multi-tenant database," in which one logical database is shared between multiple tenants.

There are various approaches for implementing multi-tenant databases. Multi-tenant databases may be implemented, for example, as a shared machine, a shared process, or a shared table. In the shared machine approach, each tenant has access to its own separate database. The separate databases are hosted in a single machine so that computing resources are shared among tenants. In the shared process approach, each tenant is provided with its own tables but in a single database that is shared between multiple tenants. And in the shared table approach, the data of all tenants is stored in the same database and in the same tables. The tables in this case have an added column with a tenant identifier, allowing the actual separation of data between individual tenants. A given table can include records from multiple tenants stored in any order. The tenant identifier column associates each record with a given tenant. In this case, every database query has to specify a value for this column.

Because of the complexities of organizational data, it is advantageous to implement multi-tenant databases within a semantic context. This can be accomplished by using a level of semantic abstraction that provides terms and abstract logic associated with the underlying data in order to manage, manipulate and analyze the data. A universe is a specific form of semantic abstraction where the semantic abstraction includes data model objects that describe the underlying data sources and define dimensions, attributes and measures that can be applied to the underlying data sources and data foundation metadata that describes a connection to, structure for, and aspects of the underlying data sources. Metadata concerning the data, such as a value for data freshness, can also be associated with the data within the logic of a semantic domain. Semantic domain technology is disclosed in the following commonly-owned United States Patent Numbers: 5,555,403; 6,247,008; 6,578,027; and 7,181,435, which are incorporated herein by reference.

Typically, a data model object in a universe is assigned a common business term such that the user does not need to understand the specific logic of the underlying data source but can work with familiar terminology when constructing queries or otherwise accessing the data. Examples of common business terms include customer, employee, product line, revenue, profit, attrition, fiscal year, quarter, and the like.

Multi-tenant databases that are implemented with universes are easier to manage and work with, as they provide a common terminology for multiple tenants. They are also very scalable as additional tenants may be added without significant overheads. Adding tenants may be simply a matter of updating or reconfiguring the universes to serve the needs of the additional tenants. A multi-tenant database implemented with universes is provided, for example, by the Business Intelligence OnDemand^{™} platform available at www.crystalreports.com, a Business Intelligence solution provided by Business Objects, an SAP^{®} company, of San Jose, CA.

Regardless of how the multi-tenant databases are implemented, they offer an ideal solution for organizations that have large data volumes (hundreds of thousands or millions of records), use multiple data sources with a high level of complexity, and need analytics, such as "ad-hoc" and "what-if" analyses for business strategic planning. However, to take advantage of the benefits offered by multi-tenant databases, tenants must surrender a level of control over their own data, trusting the Business Intelligence provider to manage it, keep it safe and protect it from intruders and other tenants. In a nutshell, multi-tenant databases are designed to be robust and secure enough to satisfy tenants concerned about their data being hosted by a third party, while also being efficient and cost-effective to manage and maintain.

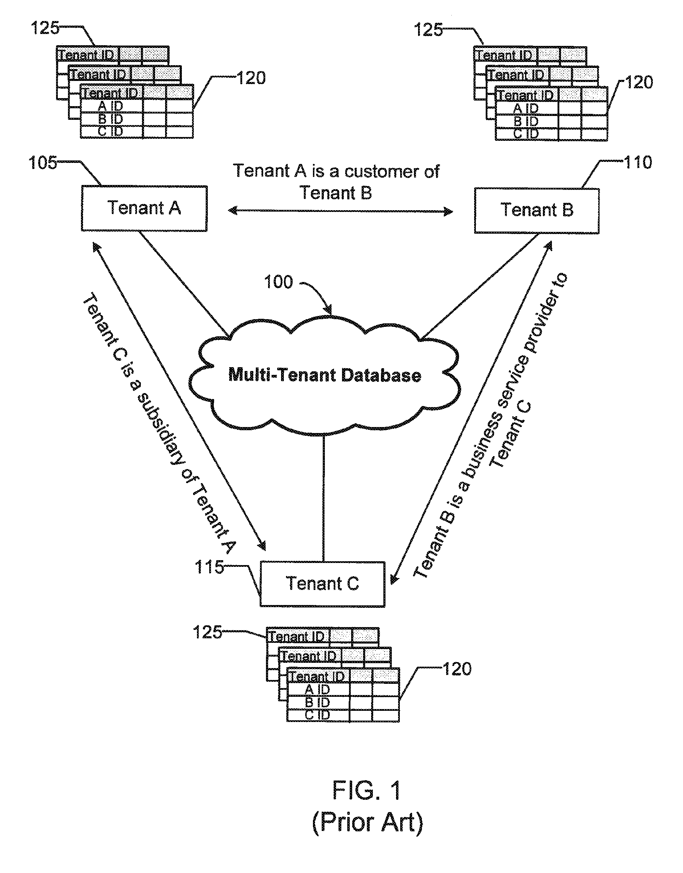

For example, consider multi-tenant database 100 shown in FIG. 1, with three tenants: tenant A (105), tenant B (110), and tenant C (115). Multi-tenant database 100 may be hosted by a Business Intelligence provider which may offer multi-tenant database 100 as part of a Business Intelligence application or service to its customers, e.g., tenants A, B, and C (105-115). Tenants A, B, and C (105-115) may use multi-tenant database 100 as a repository for all their business data, such as, for example, sales data, financial data, customer data, and so on. The business data of tenants A, B, and C (105-115) may be stored, for example, in multiple tables 120 as part of a single database in multi-tenant database 100 (e.g., implemented with the shared table approach described above). Tables 120 may have a tenant identifier column 125 to distinguish their records for each tenant.

The data records of tenants A, B, and C (105-115), although intermingled in the same tables 120, may only be accessed by their respective tenants. That is, the data records of tenant A (105) may only be accessed by tenant A (105), the data records of tenant B (110) may only be accessed by tenant B (110), and so on. In doing so, the Business Intelligence provider must implement security mechanisms to protect the data from intruders and to prevent one tenant from accessing the data of another tenant. Such security mechanisms must be reliable enough to ensure a continued level of trust between the tenants and the Business Intelligence provider hosting - and protecting - their data.

Now suppose the tenants have a business relationship. In this case, as part of the process of making business decisions concerning their relationship, the tenants may need to share some or all of their data with each other. For example, suppose tenants A, B, and C (105-115) have business relationships requiring some or all of their data to be shared. For example, tenant A may be a customer of tenant B, tenant B may be a business provider to tenant C, and tenant C may be a subsidiary of tenant A. As a customer of tenant B, tenant A may share customer account information, product information, customer invoices, and other such data with tenant B. And as a parent of tenant C, tenant A may share all of tenant C's financial, human resources, and other such data. Similarly, as a business provider to tenant C, tenant B may share some of the data needed for the service provided to tenant C.

The sharing of data among tenants, however, is not possible with currently available multi-tenant databases, including multi-tenant database 100. As described above, multi-tenant databases are designed to support data isolation among tenants in exchange for access to the Business Intelligence infrastructure and lower infrastructure costs that such databases provide.

Accordingly, it would be desirable to provide techniques for enabling both the isolation and the sharing of data among tenants of a multi-tenant database. In particular, it would be desirable to provide techniques for establishing and supporting various levels of trust among tenants of a multi-tenant database, with each level of trust offering different data sharing options.

### SUMMARY OF THE INVENTION

The invention includes a computer readable storage medium with executable instructions to establish a trust hierarchy between tenants of a multi-tenant database. Data access rights are specified for the trust hierarchy, the data access rights defined by the tenants of the multi-tenant database. Queries are processed on the multi-tenant database subject to the data access rights specified for the trust hierarchy.

The invention also includes a computer readable storage medium with executable instructions to define a multi-tenant database having a plurality of tenants, wherein each tenant has one or more users. A plurality of data access rights are created for each tenant of the multi-tenant database. A set of data access rights for a trustee associated with a first tenant is associated to a portion of the multi-tenant database associated with a second tenant. A query from the trustee on the multi-tenant database is processed for the portion the multi-tenant database associated with the second tenant subject to the set of data access rights for the trustee.

The invention further includes a method for accessing data in a multi-tenant database according to a trust hierarchy. A plurality of security trusts are created in the trust hierarchy, each security trust establishing data access rights between a tenant of the multi-tenant database and one or more trustees. One or more security trusts are associated with each tenant of the multi-tenant database. The data access rights for the one or more security trusts associated with each tenant are specified. The data access rights are converted into queries on the multi-tenant database.

### BRIEF DESCRIPTION OF THE DRAWINGS

The invention is more fully appreciated in connection with the following detailed description taken in conjunction with the accompanying drawings, in which like reference characters refer to like parts throughout, and in which:

FIG. 1 illustrates a prior art multi-tenant database;

FIG. 2 illustrates a multi-tenant database constructed in accordance with an embodiment of the invention;

FIG. 3 illustrates a trust hierarchy constructed in accordance with an embodiment of the invention;

FIG. 4 illustrates a computer for supporting a multi-tenant database constructed in accordance with an embodiment of the invention;

FIG. 5 illustrates a flow chart for implementing a multi-tenant database in accordance with an embodiment of the invention;

FIG. 6 illustrates a flow chart for accessing data in a multi-tenant database in accordance with an embodiment of the invention;

FIG. 7 illustrates a schematic diagram of exemplary security trusts established between tenants of a multi-tenant database in accordance with an embodiment of the invention;

FIG. 8 illustrates a flow chart for supporting a trust hierarchy in a multi-tenant database in accordance with an embodiment of the invention;

FIG. 9 illustrates a schematic diagram of a security trust object in accordance with an embodiment of the invention;

FIG. 10A illustrates a trustee restriction for a universe overload in accordance with an embodiment of the invention;

FIG. 10B illustrates a restriction for a universe overload in accordance with an embodiment of the invention;

FIG. 11 illustrates techniques to generate a universe overload in accordance with an embodiment of the invention;

FIG. 12 illustrates a processed query on the multi-tenant database in accordance with an embodiment of the invention; and

FIG. 13 illustrates a flow chart for using a multi-tenant database in accordance with an embodiment of the invention.

### DETAILED DESCRIPTION OF THE INVENTION

The present invention provides a system, method, software arrangement, and computer readable storage medium for accessing data in a multi-tenant database according to a trust hierarchy. A multi-tenant database, as generally used herein, refers to any database hosted by a content provider to serve the data needs of multiple tenants. The content provider may be, for example, a Business Intelligence provider. The tenants may be organizations or entities that generate, receive, manipulate, and evaluate data.

As described above and appreciated by one of ordinary skill in the art, a multi-tenant database may be implemented to store the data of multiple tenants in multiple tables of multiple databases in a single, shared machine with each database allocated to a given tenant (shared machine implementation), in multiple tables in a single database with each table allocated to a given tenant (shared process implementation), or in multiple tables in a single database with the data of all tenants stored in the same tables (shared table implementation). Regardless of the implementation, prior-art multi-tenant databases only allow a tenant to access its own data.

Some embodiments of the invention allow a tenant to access its own data and the data of other tenants provided the other tenants trust the tenant. The existence of one tenant's data is revealed to other tenants subject to the specific level of trust granted by the one tenant. For tenants of a multi-tenant database in accordance with an embodiment of the invention, each level of trust offers different data access rights.

According to an embodiment of the invention, a trust hierarchy is established to enable tenants of a multi-tenant database to share their data with and access the data of other tenants. A trust hierarchy, as generally used herein, specifies various levels of trust for tenants of a multi-tenant database. The levels of trust are generally referred to herein as security trusts. A security trust specifies a set of data access rights between a tenant and one or more trustees. A trustee may be, as generally used herein, a tenant, a group of tenants, a user, or a group of users having access to data in the multi-tenant database.

In one embodiment, a plurality of security trusts are established for a multi-tenant database. Each tenant of the multi-tenant database may have one or more security trusts associated with it. The tenant may specify the trustee(s) of each security trust as well as restrict the data access rights offered in each security trust. Trustees of a security trust may access the data of the security trust's tenant subject to the data access rights specified by the tenant.

According to an embodiment of the invention, the trustee(s) and the tenant of a given security trust may submit queries to the multi-tenant database to access the tenant's data subject to the data access rights specified for the security trust by the tenant. Each security trust is associated with a trust universe having a plurality of trust universe objects. In one embodiment, the trust universes are derived based on the existing universes of the multi-tenant database.

In one embodiment, the data access rights for a given security trust are stored in security trust objects in terms of trust universe objects. That is, the data access rights for a given security trust are stored to specify the trust universe objects that the trustees of the security trust may access from the multi-tenant database. Queries on the multi-tenant database are processed by converting the data access rights specified in a given security trust into row and column restrictions on the trust universes and generating overloads of the trusts universes that are expressed with SQL WHERE clauses. As generally used herein, an overload of a trust universe refers to the restrictions on the trust universe objects based on the data access rights associated with a given security trust.

According to an embodiment of the invention, trustees may query all the security trusts that they are entitled to access. The trustees may, for example, query the multi-tenant database to access the data of all the tenants of a given type of security trust or access the data of a specific tenant for a selected security trust. In one embodiment, the multi-tenant database may be integrated with a Business Intelligence infrastructure to allow tenants and trustees of security trusts to generate reports, dashboards, scorecards, and other such business analysis techniques to gain business insights on data stored in the multi-tenant database.

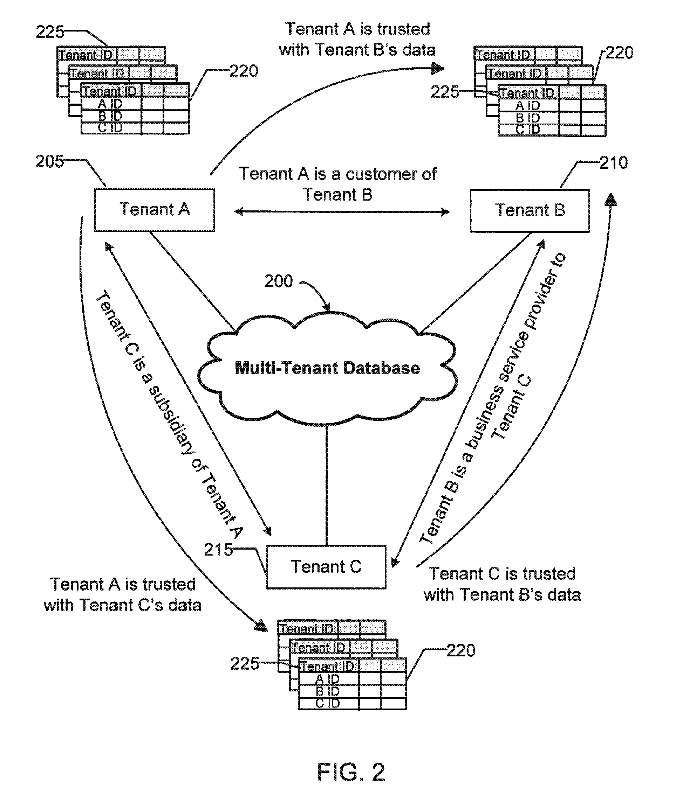

FIG. 2 illustrates a multi-tenant database constructed in accordance with an embodiment of the invention. Multi-tenant database 200 may be hosted by a Business Intelligence provider which may offer multi-tenant database 200 as part of a Business Intelligence application or service to its customers, e.g., tenants A, B, and C (205-215). Tenants A, B, and C (205-215) may use multi-tenant database 200 as a repository for all their data, such as, for example, sales data, financial data, customer data, and so on. The data of tenants A, B, and C (205-215) may be stored, for example, in multiple tables 220 as part of a single database in multi-tenant database 200 (e.g., implemented with the shared table approach described above). Tables 220 may have a tenant identifier column 225 to distinguish their records for each tenant.

Tenants A, B, and C (205-215) may have a business relationship requiring some or all of their data to be shared. For example, tenant A may be a customer of tenant B, tenant B may be a business provider to tenant C, and tenant C may be a subsidiary of tenant A. As a customer of tenant B, tenant A may share customer account information, product information, customer invoices, and other such data with tenant B. And as a parent of tenant C, tenant A may share all of tenant C's financial, human resources, and other such data. Similarly, as a business provider to tenant C, tenant B may share some of the data needed for the service provided to tenant C.

In contrast to prior art multi-tenant databases, multi-tenant database 200 enables tenants A, B, and C (205-215) to share their data subject to the specific level of trust between each other. The sharing is done by using a trust hierarchy. For example, tenant A (205) may view customer information, product information, customer invoices, and other such data by accessing the records of tenant B (210) in tables 220 of multi-tenant database 200, tenant A (205) may access all the data records of tenant C (215) in tables 220 of multi-tenant database 200, and tenant B (210) may access data pertaining to the service provided to tenant C (215) in the data records of tenant C (215) in tables 220 of multi-tenant database 200.

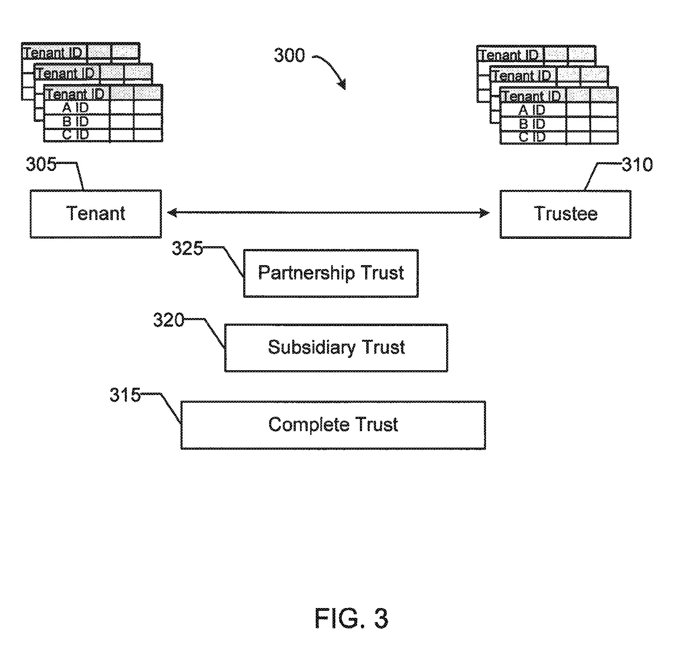

A trust hierarchy constructed in accordance with an embodiment of the invention is shown in FIG. 3. Trust hierarchy 300 is established to enable tenants of a multi-tenant database to share their data with and access the data of other tenants. Trust hierarchy 300 specifies various levels of trust for tenants of a multi-tenant database, e.g., multi-tenant database 200, with each level of trust offering different data access rights. The levels of trust are generally referred to herein as security trusts. A security trust specifies a set of data access rights between a tenant 305 and one or more trustees 310. A trustee may be a tenant, a group of tenants, a user, or a group of users having access to data in the multi-tenant database.

In one embodiment, three different types of security trusts may be provided: complete trust 315, subsidiary trust 320, and partnership trust 325. A complete trust 315 may be established between tenant 305 and trustee 310 when tenant 305 and trustee 310 share all of their data. This may be the case, for example, when tenant 305 and trustee 310 are merged organizations. A complete trust 315 between a tenant 305 and a trustee 310 may be used by tenant 305 to access all of the data records of trustee 310 in the multi-tenant database or, conversely, it may be used by trustee 310 to access all of the data records of tenant 305 in the multi-tenant database. Complete trust 315 provides the broadest data access rights in trust hierarchy 300.

Subsidiary trust 320 may be established between tenant 305 and trustee 310 when tenant 305 is a parent organization and trustee 310 is a subsidiary organization, or vice-versa. A subsidiary trust 320 may be used by the parent organization to access all of the data of the subsidiary organization in the multi-tenant database.

Lastly, partnership trust 325 may be established between tenant 305 and trustee 310 when tenant 305 and trustee 310 are engaged in a partnership. For example, tenant 305 may be a vendor, customer or business provider to trustee 310, and vice-versa. In this case, tenant 305 may allow trustee 310 to access a portion of its data on the multi-tenant database. The partnership trust 325 may be further classified into a "customer" partnership trust, a "vendor" partnership trust, a "service provider" partnership trust, and so on.

It is appreciated by one of ordinary skill in the art that additional security trusts may be established in trust hierarchy 300. For example, a "consulting" security trust may be established between a tenant and its consulting trustee, a "contractor" security trust may be established between a tenant and its contractor trustee, a "regulator" security trust may be established between a tenant and a trustee that is a regulatory agency, and so on. Each one of these security trusts may have a different set of data access rights associated with it.

According to an embodiment of the invention, tenant 305 may specify what portion of the data trustee 310 may access. As described herein below, a security trust may be associated with a trust universe. The data access rights of a given security trust may, in turn, be specified by the tenant in terms of trust universe objects.

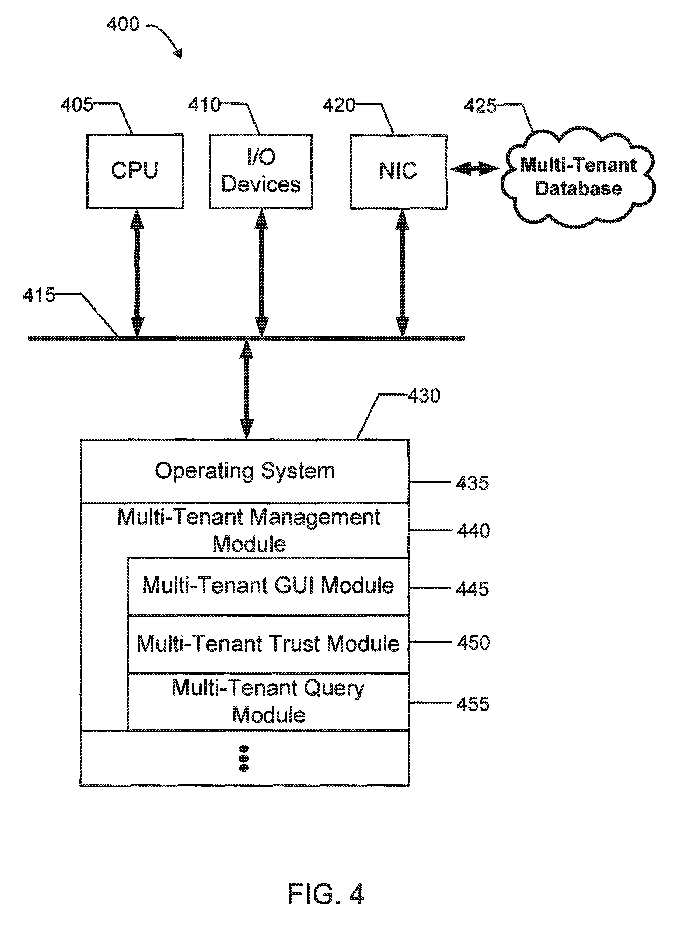

FIG. 4 illustrates a computer for supporting a multi-tenant database in accordance with an embodiment of the invention. Computer 400 includes standard components, including a Central Processing Unit ("CPU") 405 and input/output devices 410, which are linked by a bus 415. Input/output devices 410 may include a keyboard, mouse, display screen, monitor, printer, and the like.

Network Interface Circuit ("NIC") 420 may also be connected to the bus 415. NIC 420 provides connectivity to a wired or a wireless network (not shown), thereby allowing computer 400 to operate in a networked environment. For example, networked data sources 425 are connected to computer 400 through NIC 420. In accordance with an embodiment of the invention, networked data sources 425 may include a multi-tenant database.

Memory 430 is also connected to the bus 415. In one exemplary embodiment, memory 430 stores one or more of the following modules: an Operating System module 435 and a Multi-Tenant Management module 440. Operating System module 435 may include instructions for handling various system services, such as file services or for performing hardware dependant tasks. Multi-Tenant Management module 440 may include executable instructions for managing and maintaining a multi-tenant database, including supporting a graphical user interface ("GUI") and interfacing with multiple tenants.

According to an embodiment of the invention, Multi-Tenant Management module 440 includes a Multi-Tenant GUI module 445, a Multi-Tenant Trust module 450, and a Multi-Tenant Query module 455. The Multi-Tenant GUI module 445 may rely upon standard techniques to produce graphical components of a user interface, e.g., windows, icons, buttons, menu and the like, for accessing and managing multi-tenant database 425.

For example, in one embodiment, a tenant of multi-tenant database 425 may employ the GUI to define a plurality of security trusts and specify data access rights for those security trusts. The GUI may also be used to query the multi-tenant database 425 and to display results of the query to tenants and trustees of security trusts.

Multi-Tenant Trust module 450, in accordance with an embodiment of the invention, includes executable instructions to establish a trust hierarchy for multi-tenant database 425. For example, Multi-Tenant Trust module 450 may include executable instructions to define a plurality of security trusts, such as security trusts 315-325, to associate one or more security trusts with each tenant of multi-tenant database 425, and specify data access rights for the security trusts associated with each tenant of multi-tenant database 425. Multi-Tenant Trust module 450 may also include executable instructions to keep track of the security trusts associated with each tenant in a security trust table, as described in more detail herein below. Multi-Tenant Trust module 450 may rely on Multi-Tenant GUI module 445 to implement part of its operations.

Multi-Tenant Query module 455 may include executable instructions that help process, evaluate, and optimize queries on multi-tenant database 425 subject to the trust hierarchy established by Multi-Tenant Trust module 450. Multi-Tenant Query module 455 may also include executable instructions to, in accordance with an embodiment of the invention, convert the data access rights specified for the security trusts associated with each tenant of the multi-tenant database 425 into query syntax. As described in more detail herein below, queries on multi-tenant database 425 are processed based on trust universes that are generated for the security trusts established for the trust hierarchy.

It is appreciated that the executable modules stored in memory 430 are exemplary. It is also appreciated that the functions of the modules may be combined. In addition, the functions of the modules need not be performed on a single computer. Instead, the functions may be distributed across a network, if desired.

Indeed, the invention may be commonly implemented in a client-server environment with various components being implemented at the client-side and/or the server-side. For example, one of ordinary skill in the art appreciates that the functions of modules 440-455 may be performed at computer 400 or at a server connected to computer 400. In one exemplary embodiment, some or all of the functions of modules 440-455 may be performed at computer 400. In another exemplary embodiment, some or all of the functions of modules 440-455 may be performed at a server connected to computer 400. As understood by those of ordinary skill in the art, it is the functions of the invention that are significant, not where they are performed or the specific manner in which they are performed.

As also appreciated by one of ordinary skill in the art, multi-tenant database 425 may be hosted by a content provider, e.g., a Business Intelligence provider, in a web site accessed by multiple tenants. Accordingly, the functions of modules 440-455 may be performed at a web server hosting the web site. Tenants of the multi-tenant database 425 may access the web site to access, manage, and analyze their data stored in multi-tenant database 425.

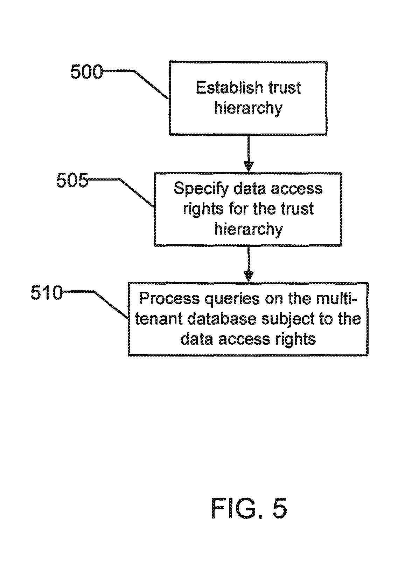

Referring now to FIG. 5, a flow chart for implementing a multi-tenant database in accordance with an embodiment of the invention is described. First, a trust hierarchy is established (500). The trust hierarchy, as described herein above with reference to FIG. 3, is established by defining a plurality of security trusts, such as, for example, security trusts 315-325. Each security trust specifies a set of data access rights between a tenant and a trustee. For example, complete trust 315 allows a trustee to access all of the tenant's data, subsidiary trust 320 allows a trustee (e.g., a parent organization) to access all of the tenant's (e.g., a subsidiary organization) data, and partnership trust 325 allows a trustee to access a portion of the tenant's data, the portion specified by the tenant.

The data access rights are specified for the trust hierarchy, and refined by the tenants of the multi-tenant database (505). That is, each tenant of the multi-tenant database accesses the GUI generated by Multi-Tenant GUI module 445 to select one or more security trusts to establish with one or more trustees. In selecting the one or more security trusts, each tenant may also refine the data access rights for those security trusts. For example, a tenant selecting a partnership trust 325 to establish with a given trustee may specify restrictions on the data access rights associated with the partnership trust.

The restrictions may specify the portion(s) of the tenant's data that the trustee may access on the multi-tenant database. For example, for a partnership trust 325 in which a trustee is a customer of the tenant, the tenant may restrict the data access rights of the trustee so that the trustee can only access customer information for customers of a given country, e.g., for customers in the U.S. As described in more detail herein below, the restrictions are expressed in terms of row and column restrictions and in terms of trust universe objects that are generated for each security trust selected by the tenant.

Lastly, queries on the multi-tenant database are processed subject to the data access rights specified for the trust hierarchy (510). As described in more detail herein below, this involves converting the restrictions on the data access rights into query syntax that is expressed in terms of trust universe objects generated for trust universes associated with each security trust established for the trust hierarchy.

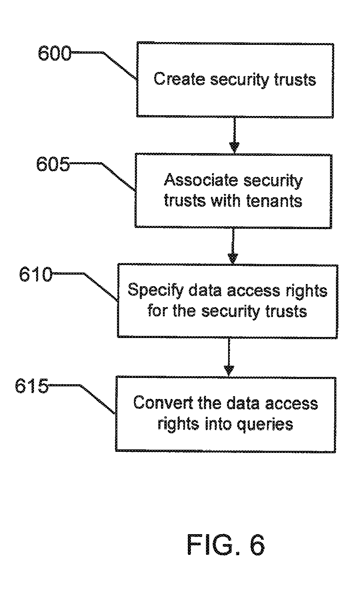

Referring now to FIG. 6, a flow chart for accessing data in a multi-tenant database in accordance with an embodiment of the invention is described. First, security trusts are created for the multi-tenant database as described above (600). The security trusts may be, for example, security trusts 315-325. Next, the security trusts are associated with tenants of the multi-tenant database (605). That is, the tenants select the security trusts that they would like to establish with one or more trustees.

A security trust table is created by Multi-Tenant Trust module 450 to keep track of the security trusts associated with each tenant. The security trust table may have, for example, three columns: one for a tenant identifier, one for a trustee identifier, and another for the type of security trust established by the tenant identified by the tenant identifier and between the tenant and the trustee identified by the trustee identifier. An example of such a table is shown in Table I below.

**Table I - Exemplary Security Trust Table**

| **Tenant ID** | **Trustee ID** | **Security Trust** |
|---|---|---|
| Tenant B | Tenant A | "Customer" |
| Tenant B | Tenant A | "Vendor" |
| Tenant C | Tenant A | "Customer" |
| Tenant D | Tenant A | "Subsidiary" |
| Tenant A | Tenant E | "Complete" |

Table I shows the security trusts established between the tenants identified in the first column by their tenant identifier ("ID") and trustees identified in the second column by their trustee ID. It is appreciated that the trustees may also be tenants of the multi-tenant database, as described above and shown in Table 1. For example, tenant A is a trustee of tenants B, C, and D in different security trusts.

As appreciated by one of ordinary skill in the art, the security trust table may identify the security trusts established by all tenants of the multi-tenant database. It is also appreciated that any given tenant of the multi-tenant database may be identified in the first column as a tenant of a security trust as well in the second column as a trustee of a security trust. For example, tenant A in Table I above is both a trustee of security trusts established with tenants B, C, and D, as well as a tenant of a security trust established with tenant E as a trustee. It is further appreciated that the second column in Table I above indicating trustees of security trusts can include not just tenants but groups of tenants, users, and groups of users having access to the multi-tenant database.

Each of the security trusts represented in the security trust table has a set of data access rights associated with it. The data access rights are specified for the security trusts by Multi-Tenant Trust module 450 and further refined by their tenants (605). Each tenant of a given security trust may restrict the data access rights associated with a given type of security trust. For example, tenant D may restrict trustee and tenant A data access rights on the customer trust established between tenant D and tenant A and shown in Table I above. Tenant D may specify, for example, that only regional managers of tenant A may have access to the U.S. customer data of tenant A.

Lastly, the data access rights associated with each security trust are converted into query syntax (610). As described herein below, this involves expressing the data access rights in terms of universe objects that are a part of trust universes associated with the security trusts. In one embodiment, the data access rights are expressed in SQL WHERE clauses that specify row and column restrictions for overloads of the trust universes. The data access rights can also be expressed in other restrictive clauses like SQL HAVING for groups or other clauses in other query languages.

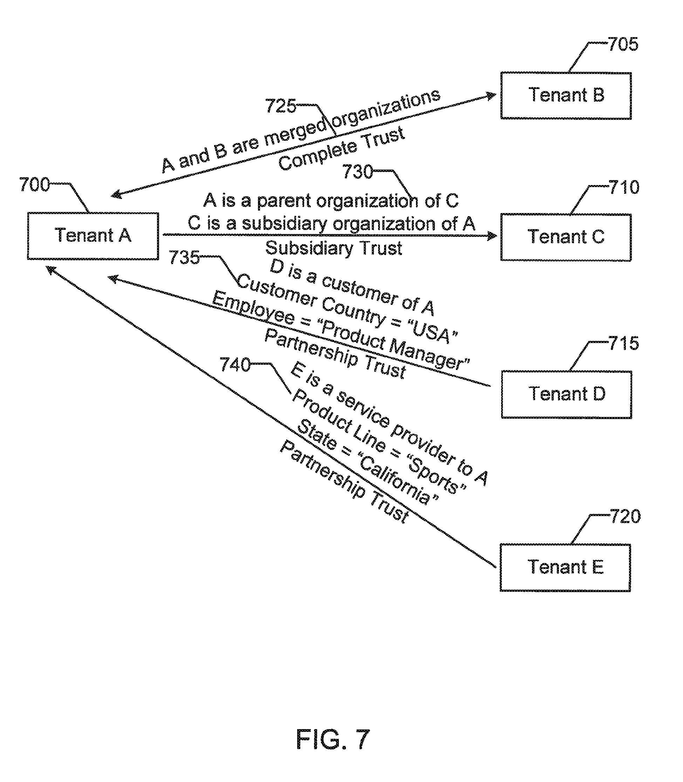

Referring now to FIG. 7, a schematic diagram of exemplary security trusts established between tenants of a multi-tenant database in accordance with an embodiment of the invention is described. Tenant A 700 may have four security trusts established with trustees, such as tenant B 705, tenant C 710, tenant D 715, and tenant E 720. For example, tenant A 700 may have a complete trust 725 established with tenant B 705, a subsidiary trust 730 established with tenant C 710, a partnership trust 735 established with tenant D 715, and a different partnership trust 740 established with tenant E 720.

Complete trust 725 may be established between tenant A 700 and tenant B 705 when, for example, tenant A 700 and tenant B 705 are merged organizations and may have access to all of each other's data. Subsidiary trust 730 may be established between tenant A 700 and tenant C 710 when tenant A 700 is a parent organization of tenant C 710, which, in turn, is a subsidiary organization of tenant A 700. In this case, tenant A 700 may have access to all of the data of tenant C 710, but not necessarily the other way around. That is, tenant A 700 may have access to all of the data records associated with tenant C 710 in the multi-tenant database but tenant C 710 may not access any of the data records associated with tenant A 700 in the multi-tenant database.

Similarly, partnership trust 735 may be established between tenant A 700 and tenant D 715 when tenant D 715 is a customer of tenant A 700. Tenant A 700 may refine the data access rights associated with a partnership trust to restrict tenant D's access to tenant A's data in the multi-tenant database to, for example, only those employees of tenant D 715 that are product managers. That is, only the product managers of tenant D 715 may have access to the data records of tenant A 700 in the multi-tenant database.

A partnership trust 740 may also be established between tenant A 700 and tenant E 720 when tenant E 720 is a service provider to tenant A 700. Tenant A 700 may refine the data access rights associated with a partnership trust to restrict tenant E's access to tenant A's data in the multi-tenant database to, for example, only the data pertaining to the "Sports" product line in the state of California.

As appreciated by one of ordinary skill in the art, a tenant may refine the data access rights associated with a given type of security trust to impose multiple restrictions on those rights. As also appreciated by one of ordinary skill in the art, the data access rights associated with each security trust enable tenants of a multi-tenant database to customize and personalize their data access security options at a level not otherwise possible with any of the multi-tenant databases available in the prior art. Specifying their data access rights for different security trusts enables tenants of a multi-tenant database to benefit from the efficiencies provided by such databases while customizing their data sharing capabilities with other tenants and users of the database.

As further appreciated by one of ordinary skill in the art, specifying the data access rights in terms of trust universe objects allows tenants of a multi-tenant database to easily interact with the multi-tenant database to access, manage, and query their data. Because trust universe objects are expressed in common business terms, tenants may easily create, update, and customize their trust hierarchies on the multi-tenant database without incurring significant training and infrastructure costs.

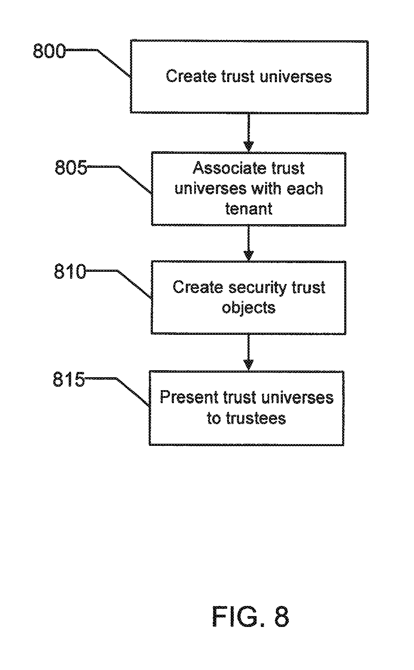

Referring now to FIG. 8, a flow chart for supporting a trust hierarchy in a multi-tenant database in accordance with an embodiment of the invention is described. First, trust universes are created for each type of security trust generated for the trust hierarchy (800). The trust universes may be derived from existing universes of the multi-tenant database. A trust universe for a partnership trust between a tenant and one of its customers may, for example, contain the following universe classes and objects shown in Table II below.

**Table II - Trust Universe Classes and Objects for a Partnership Trust**

| **Trust Universe Class** | **Trust Universe Objects** |
|---|---|
| Supplier | Name |
| | Address |
| | Country |
| Product Line | Name |
| | Age Group |
| Product | Name |
| | Size |
| | Color |
| | Unit Price |
| Transaction | Transaction ID |
| | Transaction Date |
| | Post Date |
| | Amount |
| Customer | Name |
| | Address |
| | Country |
| | Credit Card Number |

Next, the derived trust universes are associated with each tenant (805). That is, the derived trust universes are associated with the security trusts established by and for the tenant. Security trust objects are created to associate a given trust universe with a given tenant through an object relationship (810). The security trust objects created for a given tenant may be stored, for example, in the folder corresponding to the tenant in the multi-tenant database.

In one embodiment, each security trust object stores the data access rights for the security trust associated with it. For example, suppose that a given tenant A wants trustee and tenant B of a partnership trust to access customer data in tenant A's data records in the multi-tenant database only for those customers in the U.S.. The security trust object corresponding to that security trust may store the restriction "customer.country = USA" to specify a row/column restriction for the "customer" in the trust universe derived for the partnership trust and the "country" object in the "customer" class.

The security trust objects are used to impose the restrictions stored therein on queries performed by the trustee(s) of the security trusts associated with the security trust objects. In the example above, the "customer.country = USA" restriction is imposed on every query performed by tenant B to access the data records of tenant A in the multi-tenant database subject to the partnership trust between tenant A and tenant B.

The trust universe associated with a given security trust is presented to the trustee(s) of the given security trust subject to the restrictions stored in the security trust objects (815). This is accomplished by converting the restrictions stored in the security trust objects into row and column restrictions and generating overloads of the trust universes according to those restrictions. The overloads of the trust universes are expressed with SQL WHERE clauses.

It is appreciated that updates to a trust universe or to the data access rights associated with a given security trust are accounted for by updating the row and column restrictions for the trust universe overloads. It is also appreciated that overload row and column restrictions may only use fields of the multi-tenant database that the restrictions apply to. For example, overload row restrictions for the "customer.country = USA" restriction above may only use the country field of a customer table. Furthermore, it is appreciated that universe objects may span more than one table. In this case, the overload row and column restrictions are propagated to all the tables spanned by the universe objects subject to a restriction specified by a tenant of a given security trust.

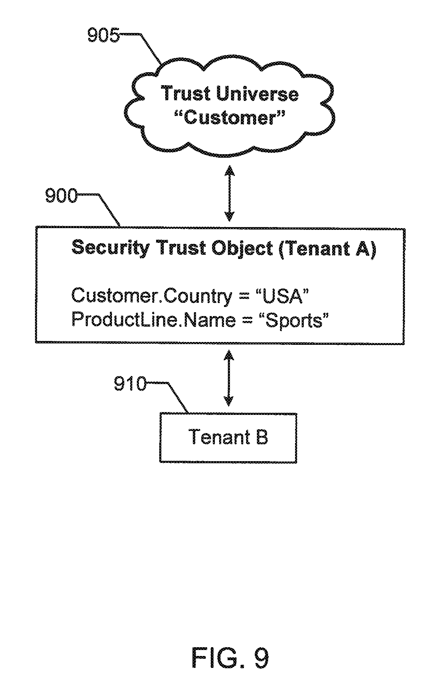

Referring now to FIG. 9, a schematic diagram of a security trust object in accordance with an embodiment of the invention is described. Security trust object 900 associates trust universe 905 for a partnership trust between tenant A and its customer tenant B 910. Security trust object 900 stores data access rights for the partnership trust, such as restrictions for the country and the product line for which tenant B 910 may access tenant A's data in the multi-tenant database.

A security trust object such as security trust object 900 is created for each trust universe associated with a given tenant of the multi-tenant database, i.e., a security trust object is created to associate each security trust specified by the given tenant with the trust universe corresponding to the type of security trust established. For example, suppose that a given tenant specifies three partnership trusts, two complete trusts, and one subsidiary trust for trustees with access to the multi-tenant database. A total of six security trust objects are created for the six security trusts specified by the tenant, one to associate each security trust with a corresponding trust universe. The data access rights and restrictions for each security trust are stored in the security trust objects associated with the security trust.

As described above, the restrictions stored in the security trust objects are converted into query syntax. In one embodiment, restrictions stored in the security trust objects are converted into row and column restrictions to generate overloads of the trust universes according to those restrictions. The overloads of the trust universes are expressed with SQL WHERE clauses.

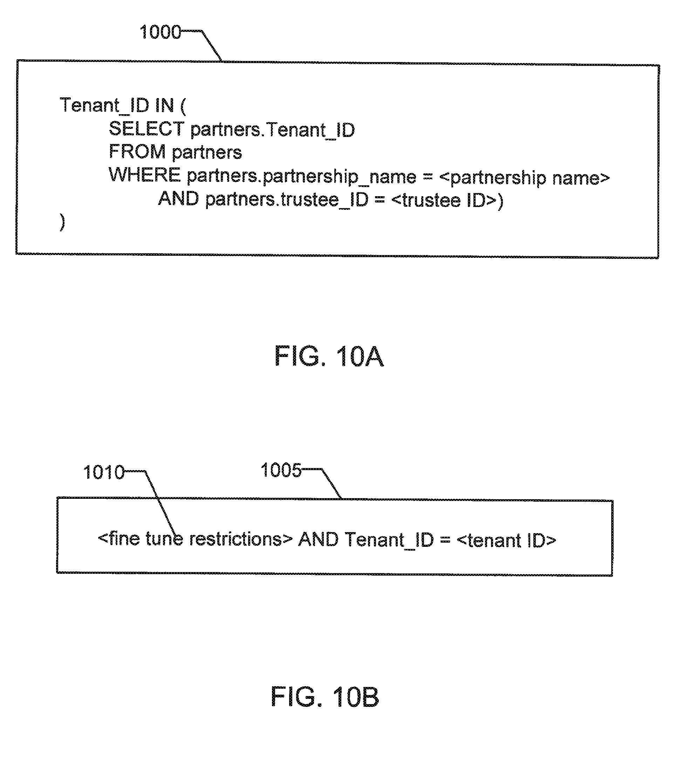

Referring now to FIG. 10A, a trustee restriction for a universe overload in accordance with an embodiment of the invention is described. Trustee restriction 1000 is specified in a SQL WHERE clause to restrict the data access of a given trustee identified by a trustee ID. When the given trustee accesses the multi-tenant database to query data records of the tenant identified by the tenant ID, trustee restriction 1000 is imposed on the query to ensure that only the trustees associated with security trusts specified by the tenant have access to the tenant's data records in the multi-tenant database.

Restrictions stored in security trust objects associated with the security trusts specified by the tenant are expressed in an AND statement for the SQL WHERE clause. For example, restriction 1005 illustrated in FIG. 10B ensures that the trustee identified by the trustee ID only has access to data according to fine tune restrictions 1010. Fine tune restrictions 1010 may specify, for example, a country and a product line for which the trustee has access to in the data records of the tenant stored in the multi-tenant database.

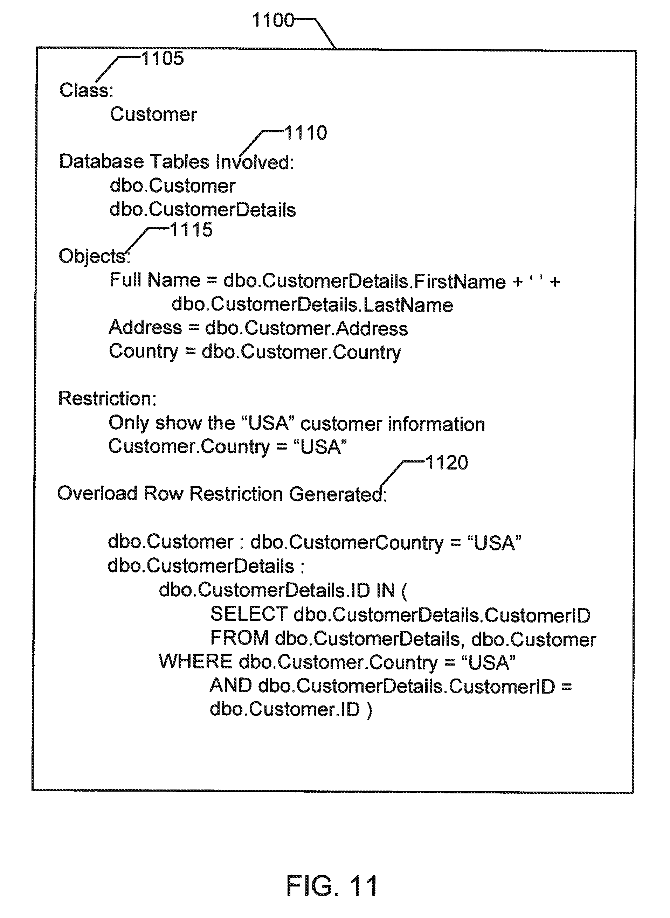

FIG. 11 illustrates pseudo code to generate a universe overload in accordance with an embodiment of the invention. Diagram 1100 illustrates how a universe overload is generated when a given trustee accesses the multi-tenant database to query data records of a given tenant subject to a security trust between the trustee and the tenant. For example, consider restrictions specified by the tenant of the security trust limiting the data access of the trustee to only customer data in the U.S. Such restrictions may involve a customer class 1105 of the trust universe associated with the security trust, a customer and a customer details tables 1110 storing data for the trust universe, and customer name, address and country universe objects 1115. The restrictions are specified in query syntax 1120 using a SQL WHERE clause.

It is appreciated by one of ordinary skill in the art that multiple restrictions are "AND-ed" together in the SQL WHERE clause. It is also appreciated that if a given restriction is assigned to a trustee and to a group that the trustee belongs to, then the restrictions are also "AND-ed" together. Similarly, if a given restriction is assigned to a trustee and to two groups that the trustee belongs to, then the restrictions between the two groups are "OR-ed" together.

Furthermore, it is appreciated that, according to an embodiment of the invention, a trustee may access the multi-tenant database to access data records of a tenant subject to a security trust. The trustee may browse all the security trusts that it is entitled to see. In this case, Multi-Tenant GUI module 445 lists all the security trusts and the corresponding tenants with whom the trustee is entrusted. Multi-Tenant GUI module 445 may also present to the trustee all the trust universe objects corresponding to those security trusts.

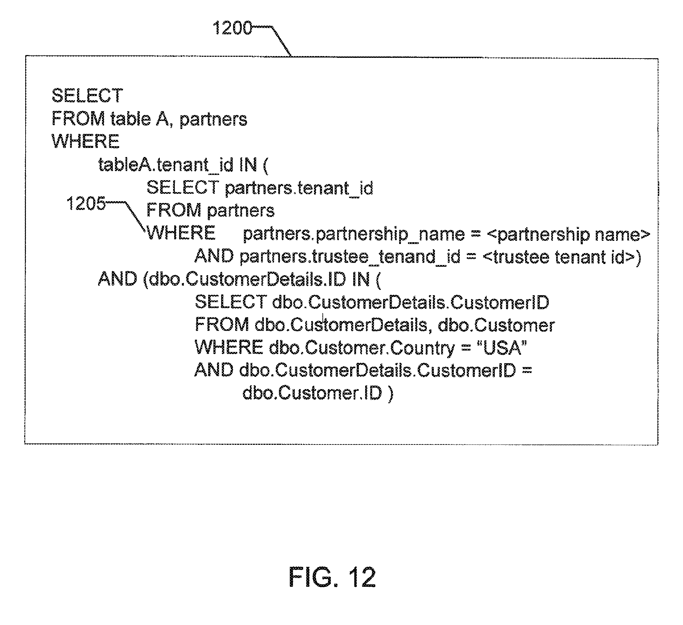

Accordingly, it is also appreciated that a trustee may access the data of all security trusts it is entitled to access or the data of a given security trust. For example, FIG. 12 illustrates a query processed on the multi-tenant database in accordance with an embodiment of the invention. Query 1200 illustrates the universe overload generated for a given security trust with data stored in "Table A." As appreciated by one of ordinary skill in the art, the "partners" table corresponds to the security trust table described above, which stores the identifiers for the tenant, trustee and the corresponding security trust. The restrictions for the security trust are expressed with SQL WHERE clause 1205, as described above.

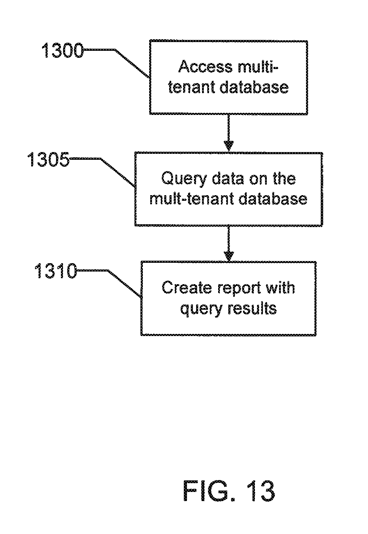

Referring now to FIG. 13, a flow chart for using a multi-tenant database in accordance with an embodiment of the invention is described. First, a trustee accesses a multi-tenant database (1300). The trustee may be a tenant (e.g., Tenant A) or associated with a tenant. The multi-tenant database may be hosted by a content provider in a web site. IN this case, the trustee access the multi-tenant database by logging into the web site.

According to an embodiment of the invention, there exists a trust hierarchy between the trustee and two or more tenants (e.g., Tenants B and C). Pursuant to the trust hierarchy, the trustee queries the data associated with the two or more tenants (1305). The results of the queries are returned subject to the specific security trusts between the trustee and the two or more tenants.

Using a reporting tool, the trustee builds a report with the query results (1310). The report construction is simple as each tenant may have its data organized in a similar way. For example, a trustee might be a customer of the two tenants and create a report showing both tenants' (i.e., vendors') shipments to the trustee. The report's design is substantially unchanged as tenants modify their security trusts, i.e., as tenants add and remove security trusts from their trust hierarchies.

Advantageously, the present invention enables tenants of a multi-tenant database to establish various levels of trust and data access options to customize the sharing of data with other tenants of the multi-tenant database. Doing so enables tenants of a multi-tenant database to benefit from the efficiencies provided by such databases while customizing their data sharing capabilities with other tenants and users of the database.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications; they thereby enable others skilled in the art to best utilize the invention and various embodiments with various modifications as are suited to the particular use contemplated. It is intended that the following claims and their equivalents define the scope of the invention.

## Claims

1. A computer readable storage medium, comprising executable instructions to:
establish a trust hierarchy between tenants of a multi-tenant database;
specify data access rights for the trust hierarchy, the data access rights refined by the tenants of the multi-tenant database; and
process queries on the multi-tenant database subject to the data access rights specified for the trust hierarchy.

2. The computer readable storage medium of claim 1, wherein the executable instructions to establish a trust hierarchy further comprise executable instructions to define a plurality of security trusts in the trust hierarchy, wherein a security trust preferably comprises a set of data access rights between a tenant of the multi-tenant database and one or more trustees.

3. The computer readable storage medium of claim 2, wherein the plurality of security trusts are selected from the list comprising: complete trust, subsidiary trust, and partnership trust.

4. The computer readable storage medium of claim 2, wherein the executable instructions to establish a trust hierarchy further comprise executable instructions to associate one or more security trusts with each tenant of the multi-tenant database, the one or more security trusts selected by the each tenant.

5. The computer readable storage medium of claim 4, wherein the executable instructions to specify data access rights for the trust hierarchy further comprise executable instructions to specify restrictions on the set of data access rights of each one or more security trusts associated with each tenant of the multi-tenant database.

6. The computer readable storage medium of claim 5, further comprising executable instructions to create a plurality of trust universes for the trust hierarchy, the plurality of trust universes derived from one or more universes in the multi-tenant database.

7. The computer readable storage medium of claim 6, wherein a trust universe is associated with each security trust.

8. The computer readable storage medium of claim 6, wherein the executable instructions to create a plurality of trust universes further comprise executable instructions to create a plurality of security trust objects to associate a trust universe with each tenant in the multi-tenant database, preferably wherein each security trust object stores the restrictions on the data access rights for a security trust associated with each tenant of the multi-tenant database.

9. The computer readable storage medium of claim 6, wherein the executable instructions to create a plurality of trust universes further comprise executable instructions to create a security trust table in the multi-tenant database to represent the one or more security trusts associated with each tenant of the multi-tenant database.

10. The computer readable storage medium of claim 9, wherein the executable instructions to create a plurality of trust universes further comprise executable instructions to create overloads of the trust universes subject to the restrictions stored on the security trust objects, preferably further comprising executable instructions to assign the overloads of the trust universes to trustees of the one or more security trusts associated with each tenant of the multi-tenant database.

11. The computer readable storage medium of claim 8, wherein the executable instructions to process queries on the multi-tenant database further comprise executable instructions to convert the restrictions stored on the security trust objects to a SQL WHERE clause.

12. The computer readable storage medium of claim 6, wherein the executable instructions to process queries on the multi-tenant database further comprise executable instructions to:
present to a trustee of a security trust a set of trust universe objects that the trustee is entitled to access in the multi-tenant database, wherein:
each trust universe comprises a plurality of trust universe objects, and
each security trust specifies the trust universe objects that trustees of the security trust are entitled to access in the multi-tenant database.

13. The computer readable storage medium of claim 9, wherein the executable instructions to process queries on the multi-tenant database further comprise executable instructions to process queries for a trustee on each trust universe associated with each security trust between the trustee and the tenants of the multi-tenant database.

14. A computer readable storage medium, comprising executable instructions to:
define a multi-tenant database having a plurality of tenants, wherein each tenant has one or more users;
create a plurality of data access rights to the multi-tenant database for each tenant of the multi-tenant database;
associate a set of data access rights for a trustee associated with a first tenant to a portion of the multi-tenant database associated with a second tenant; and
process a query from the trustee on the multi-tenant database for the portion of the multi-tenant database associated with the second tenant subject to the set of data access rights for the trustee.

15. The computer readable storage medium of claim 14, further comprising executable instructions to create a trust universe, the trust universe comprising a trust universe object to store restrictions based on the set of data access rights.

16. The computer readable storage medium of claim 15, further comprising executable instructions to:
convert the restrictions stored in the trust universe object into a restriction selected from a schema restriction, a table restriction, a row restriction and a column restriction; and
generate an overload of the trust universe according to the restrictions.

17. The computer readable storage medium of claim 14, further comprising executable instructions to:
process a further query from the trustee for portions of the database associated with a plurality of trusting tenants, each trusting tenant having granted the data access rights to the trustee; and
create a report showing results from the further query, the report having similar data from each trusting tenant.

18. The computer readable storage medium of claim 14, further comprise executable instructions to:
define a plurality of security trusts for the multi-tenant database, where a security trust is associated with a tenant;
create a plurality of trust universes for the plurality of security trusts;
associate one or more trust universes with each tenant; and
create a plurality of security trust objects to store data access rights for the one or more trust universes associated with each tenant.

19. The computer readable storage medium of claim 18, wherein the executable instructions to associate one or more trust universes with each tenant comprise executable instructions to establish one or more security trusts for each tenant, each security trust associated with a trust universe and with one or more trustees, preferably wherein the executable instructions to process queries on the multi-tenant database comprises executable instructions to present the trust universe associated with each security trust to the one or more trustees subject to the data access rights for the trust universe.

20. A method for accessing data in a multi-tenant database according to a trust hierarchy, comprising:
creating a plurality of security trusts in the trust hierarchy, each security trust establishing data access rights between a tenant of the multi-tenant database and one or more trustees;
associating one or more security trusts with each tenant of the multi-tenant database;
specifying the data access rights for the one or more security trusts associated with each tenant; and
converting the data access rights into queries on the multi-tenant database.

21. The method of claim 20, wherein converting the data access rights into queries of the multi-tenant database comprises deriving a plurality of trust universes for the plurality of security trusts, the plurality of trust universes comprising a plurality of trust universe objects, and the data access rights specifying restrictions on the plurality of trust universe objects for the one or more trustees of each security trust.
